(19) Europäisches Patentamt / European Patent Office / Office européen des brevets

(11) **EP 2 136 597 B1**

(12) **EUROPEAN PATENT SPECIFICATION**

(45) Date of publication and mention
of the grant of the patent:
**16.01.2013 Bulletin 2013/03**

(51) Int Cl.:
*H04W 72/08* *(2009.01)*    *H04L 25/02* *(2006.01)*
*H04B 1/10* *(2006.01)*    *H04L 1/20* *(2006.01)*

(21) Application number: **08360017.1**

(22) Date of filing: **20.06.2008**

(54) **Allocation of frequency depending of interference cancellation efficiency**

Frequenz zuweisung abhängig von der Interferenzunterdrückungeffizienz

Allocation de fréquence dépendant de l'efficacité de suppression d'interférence

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**23.12.2009 Bulletin 2009/52**

(73) Proprietor: **Alcatel Lucent
75007 Paris (FR)**

(72) Inventor: **Kuzminskiy, Alexandr
Swindon
Wiltshire SN5 5BG (GB)**

(74) Representative: **Sarup, David Alexander
Alcatel-Lucent Telecom Limited
Unit 18, Core 3, Workzone
Innova Business Park
Electric Avenue
Enfield
EN3 7XU (GB)**

(56) References cited:
**WO-A-02/054809    WO-A-2004/057900
WO-A-2007/074215**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention relates to a method of controlling interference of data transmissions over frequency channels allocated to user equipment by a base station, a base station, a communications system and a computer program product.

BACKGROUND OF THE INVENTION

Techniques for controlling interference of data transmissions are known. For example, in a WiMax network (such as that described in O. Ashagi, S. Murphy, L. Murphy, "A distributed approach to interference mitigation between OFDM-based 802.16 Systems operating in license-exempt spectrum," in Proc. International Conference on Communications, pp. 4855-4860, 2007), a number of independent subsystems each containing a base station and corresponding user equipment are provided. Subsystems are not cooperative and so each base station only has control of and information on their own user equipment. Base stations prescribe the frequency channels and transmission powers to their own user equipment. User equipment then transmit data to their base stations using the frequency channel allocated by that base station. However, if a number of user equipment from different subsystems use the same frequency channel, then they interfere with each other. It will be appreciated that such interference will always be the case if the total number of user equipment in all subsystems exceeds the total number of available frequency channels.

To help ameliorate interference, it is known to utilise a listening interval prior to transmission to help ensure that a frequency channel is not currently being utilised. Such an approach is referred to as carrier sense multiple access with collision avoidance, such as that used in IEEE 802.11 systems (and described in Wireless LAN Medium Access Control (MAC) and Physical Layer (PHY) Specifications, IEEE std 802.11, 1999*)*. However, this approach significantly restricts overall network efficiency.

Simultaneous transmissions from user equipment of different subsystems can be supported within the same frequency channel, which improves overall network efficiency, by using base stations having multiple-antennae. The base station receives the data transmission over the frequency channel using the multiple-antennae and then convolves the received signals to extract the desired data transmission using known techniques such as orthogonal frequency demultiplexing (such as would occur in WiMax systems) or or multicarrier filter bank technique for frequency channel forming (as described in T. Ihalainen, T. H. Stitz, M. Rinne, M. Renfors, "Channel equalization in filter bank based multicarrier modulation for wireless communications," EURASIP Journal on Advances in Signal Processing, article ID 49389, 2007) and spatial filtering (as described in R. A. Monzingo, T. W. Miller, "Introduction to adaptive arrays," Wiley-Interscience, New York, 1980). Performance is further enhanced by the base station determining the most suitable frequency channels to support data transmissions from its user equipment. Those channels which experience the lowest interference power levels are selected and control information is transmitted to user equipment using a reverse control link to cause the user equipment to transmit on that frequency channel.

However, the overall network efficiency can still fall short of expectations. Accordingly, it is desired to provide an improved technique for controlling interference of data transmissions over frequency channels.

WO 2004/057900 discloses a method of channel allocation in a cellular communication network. A carrier to inference ratio for a selected carrier frequency and the potentially interfering signals is calculated. A dominant interference ratio being a ratio of strongest potentially interfering signal with respect to other potentially interfering signals is also calculated. At least one of the dominant interference ratio and the carrier to interference ratio is used to select a channel for the connection to be established.

WO 02/054809 discloses a method and system for mobile communication in which a channel is allocated for a connection having a certain quality of service between a mobile station and a base station in a network whose time slots are synchronised with each other.

SUMMARY OF THE INVENTION

According to a first aspect of the present invention there is provided a method of controlling interference of data transmissions over frequency channels allocated to user equipment by a base station, the method comprising the steps of: (i) monitoring at the base station current data transmission interference; (ii) determining at the base station an interference cancellation efficiency achievable for data transmissions over frequency channels allocatable to the user equipment by the base station; and (iii) for data transmissions over each frequency channel currently allocated which fail to achieve a predetermined interference cancellation efficiency, reallocating that data transmission to another frequency channel, the another frequency channel being determined by the base station to have an improved interference cancellation efficiency.

The first aspect recognises that a problem with the multi-antennae approach is that channel selection is based on interference power levels rather than the ability to cancel interference. Selecting channels based on interference power levels can lead to a channel being selected in which, although having low levels of interference, that channel is in fact highly correlated with an interfering transmission. In other words, selecting the frequency channel based on interference power levels cannot guarantee that some of the interfering signals from other subsystems will hot propagate through the frequency channels highly correlated with the selected frequency channel for the data transmission. This can then cause high levels of interference to be propagated between those highly correlated channels. This can lead to significant performance degradation, making it impossible to guarantee that a required quality of service can be achieved. However, by selecting a frequency channel based on interference cancellation factors, co-linearity between data transmissions on the selected frequency channels and data transmission on interfering frequency channels can be avoided. This can lead to the situation where a channel having a relatively high interference power level is selected over a channel having a relatively low interference power level, if that channel having the relatively high interference power level can be cancelled more efficiently than the channel having the relatively low interference power level. Hence, frequency channel selection uses knowledge of the efficiency of interference cancellation between channels, rather than just assuming that the channel having the lowest interference power will achieve the highest quality service levels.

Accordingly, monitoring of the current data transmission interference occurs at the base station and a determination is made of the interference cancellation efficiency which is achievable on frequency channels allocatable to user equipment. By determining the interference cancellation efficiency which can be achieved on allocatable frequency channels an assessment can be made of whether the optimum frequency channels are being used. In order to assist convergence of the system, only when a frequency channel fails to achieve a particular efficiency is another frequency channel having a better efficiency selected. Also, the minimum number of frequency channel changes may be made in order to minimise changes to the current data transmission interference. This approach helps to ensure that interfering signals from other subsystems do not propagate through the channels highly correlated with the frequency channel selected for the data transmissions which helps to improve overall quality of service levels.

In one embodiment the step (ii) comprises determining an interference cancellation efficiency achievable by estimating a signal to interference plus noise ratio for data transmissions over each frequency channel allocatable to the user equipment by the base station. Hence, the signal to interference plus noise ratio is estimated for each frequency channel, which provides an indication of the interference channel efficiency which would be achievable on those frequency channels.

In one embodiment the step (i) comprises monitoring current data transmission interference by generating an estimated interference covariance matrix for all frequency channels allocatable by the base station and the step (ii) comprises determining an interference cancellation efficiency achievable by estimating a signal to interference plus noise ratio for each frequency channel allocatable to the user equipment by the base station using the estimated interference covariance matrix. Hence, an interference co-variance matrix is generated by monitoring current data transmission interference measured by the base station. The signal to interference plus noise ratio can then be calculated from the estimated interference co-variance matrix to provide an indication of which frequency channels are likely to have the best interference cancellation efficiency.

In one embodiment the step (i) comprises monitoring current data transmission interference by generating an estimated interference covariance matrix for all frequency channels allocatable by the base station and by generating a phase change and attenuation estimate for each propagation channel of the frequency channels and the step (ii) comprises determining an interference cancellation efficiency achievable by estimating a signal to interference plus noise ratio for each frequency channel allocatable to the user equipment by the base station using the estimated interference covariance matrix and the phase change and attenuation estimate. Accordingly, in addition to generating the estimated interference co-variance matrix, the base station also generates an estimator of channels in the form of a phase change and attenuation estimate for each of the propagation channels of the frequency channels and utilises this additional information to calculate the signal to interference plus noise ratio for each frequency channel.

In one embodiment, the estimated interference covariance matrix $\hat{\mathbf{R}}_l$, is calculated in accordance with the following algorithm:

$$\hat{\mathbf{R}}_l = N^{-1}\mathbf{X}_l\mathbf{X}_l^*, l = 1, \ldots, L \qquad \text{(Equation 1)}$$

where $\mathbf{X}_l$ is a $K \times N$ matrix of the signal received in the $l^{\text{th}}$ frequency channel during a listening interval when all user equipment associated with the base station do not transmit, $L$ is the number of frequency channels allocatable by the base station, $K$ is the number of base station receive antennas, $N$ is the number of samples and $(\cdot)^*$ is a conjugate transposition operation.

In one embodiment, the signal to interference plus noise ratio $\text{SINR}_{lm}$ for the $m^{\text{th}}$ user equipment in the $l^{\text{th}}$

frequency channel is calculated in accordance with the following algorithm:

$$\mathrm{SINR}_{lm} = \hat{\mathbf{h}}_{lm}^{*} \hat{\mathbf{R}}_{l}^{-1} \mathbf{h}_{lm} \qquad \text{(Equation 2)}$$

where $\hat{\mathbf{h}}_{lm}$ and $\hat{\mathbf{w}}_{lm}$ are $K \times 1$ vectors of channel estimate and antenna weights for an $m^{th}$ user equipment in the $l^{th}$ frequency channel.

In one embodiment, the step (iii) comprises reallocating that data transmission to another frequency channel by selecting a frequency channel determined to have a minimum signal to interference plus noise ratio of the frequency channels allocatable by the base station. Accordingly, the data transmission is re-allocated to the frequency channel having the minimum signal to interference plus noise ratio. It will be appreciated that this may, in turn, then require any user equipment utilising that channel to select the frequency channel from the remaining frequency channels which has the next minimum signal to interference plus noise ratio, and so on. Of course, such selection will seek to ensure that the minimum number of frequency channel changes are made in order to minimise changes to the current data transmission interference.

In one embodiment, the step (iii) comprises reallocating that data transmission to another frequency channel by selecting a frequency channel determined in accordance with the following algorithm:

$$\{l_m, m = 1, \ldots, M\} = \max \min_{l,m} \mathrm{SINR}_{lm} \qquad \text{(Equation 3)}$$

where $l_m$ is a selected frequency channel for the $m^{th}$ user equipment and $M$ is the number of user equipment supported by that base station.

In one embodiment, the step (iii) comprises reallocating that data transmission and at least one other data transmission to other frequency channels by selecting frequency channels determined to have minimum signal to interference plus noise ratios of frequency channels allocatable by the base station. Alternatively, an assessment may be made of which frequency channels being utilised by the base station collectively provide the minimum signal to interference plus noise ratio. It will be appreciated that this may mean that a frequency channel having the absolute minimum signal to interference plus noise ratio not being selected if this does not enable the overall minimum to be achieved. Once again, such selection will seek to ensure that the minimum number of frequency channel changes are made in order to minimise changes to the current data transmission interference.

In one embodiment, the step (iii) comprises reallocating that and at least one other data transmission to other frequency channels having the maximum signal to interference plus noise ratio from amongst the frequency channels by selecting frequency channels determined accordance with the following algorithm:

$$\{l_m, m = 1, \ldots, M\} = \max_{l} \mathrm{SINR}_{lm} \qquad \text{(Equation 4)}.$$

In one embodiment, a transmission power for each user equipment is determined in accordance with the following algorithms:

$$p_m = \frac{\dfrac{P}{\mathrm{SINR}_{l_m m}}}{\displaystyle\sum_{q=1}^{M} \dfrac{1}{\mathrm{SINR}_{l_q q}}}, m = 1, \ldots, M \qquad \text{(Equation 5)}$$

where $P_m$ is a selected power for the $m^{th}$ user equipment and

$$P = \sum_{m=1}^{M} p_m \qquad \text{(Equation 6)}$$

is the total power constraint for the base station.

In one embodiment, the step (i) comprises monitoring at the base station current data transmission interference during a base station listening interval arranged to occur pseudo-randomly. By causing the listening interval in which the monitoring of interference takes place to occur pseudo-randomly, the likelihood of more than one base station listening at the same time and therefore not necessarily receiving a complete indication of the data transmission interference picture is reduced. Also, if the relative durations of the listening period is significantly shorter than any transmission periods, then the likelihood of receiving a misleading picture of the overall data transmission interference is further reduced.

In one embodiment, step (iii) comprises minimising reallocations of data transmission to another frequency channel in order to minimise changes to the data transmission interference.

According to a second aspect of the present invention there is provided a base station operable to control interference of data transmissions over frequency channels allocated to user equipment by the base station, the base station comprising: a receiver operable to monitor current data transmission interference; estimation logic operable to determine an interference cancellation efficiency achievable for data transmissions over frequency channels allocatable to the user equipment by the base station; and reallocation logic operable to determine whether data transmissions over each frequency channel currently allocated fail to achieve a predetermined interference cancellation efficiency and, if so, to reallocate that data transmission to another frequency channel, the another frequency channel being selected to have an improved interference cancellation efficiency.

In one embodiment, the estimation logic is operable to determine an interference cancellation efficiency achievable by estimating a signal to interference plus noise ratio for data transmissions over each frequency channel allocatable to the user equipment by the base station.

In one embodiment, the receiver is operable to monitor current data transmission interference by generating an estimated interference covariance matrix for all frequency channels allocatable by the base station and the estimation logic is operable to determine an interference cancellation efficiency achievable by estimating a signal to interference plus noise ratio for each frequency channel allocatable to the user equipment by the base station using the estimated interference covariance matrix.

In one embodiment, the receiver is operable to monitor current data transmission interference by generating an estimated interference covariance matrix for all frequency channels allocatable by the base station and by generating a phase change and attenuation estimate for each propagation channel of the frequency channels and the estimation logic is operable to determine an interference cancellation efficiency achievable by estimating a signal to interference plus noise ratio for each frequency channel allocatable to the user equipment by the base station using the estimated interference covariance matrix and the phase change and attenuation estimate.

In one embodiment, the receiver is operable to generate the estimated interference covariance matrix $\hat{\mathbf{R}}_l$, in accordance with the following algorithm:

$$\hat{\mathbf{R}}_l = N^{-1}\mathbf{X}_l\mathbf{X}_l^*, l = 1, \ldots, L \qquad \text{(Equation 1)}$$

where $\mathbf{X}_l$ is a $K \times N$ matrix of the signal received in the $l^{\text{th}}$ frequency channel during a listening interval when all user equipment associated with the base station do not transmit, $L$ is the number of frequency channels allocatable by the base station, $K$ is the number of base station receive antennas, $N$ is the number of samples and $(\cdot)^*$ is a conjugate transposition operation.

In one embodiment, the estimation logic is operable to generate the signal to interference plus noise ratio $\text{SINR}_{lm}$ for the $m^{\text{th}}$ user equipment in the $l^{\text{th}}$ frequency channel is calculated in accordance with the following algorithm:

$$\text{SINR}_{lm} = \hat{\mathbf{h}}_{lm}^* \hat{\mathbf{R}}_l^{-1}\mathbf{h}_{lm} \qquad \text{(Equation 2)}$$

where $\hat{\mathbf{h}}_{lm}$ and $\hat{\mathbf{w}}_{lm}$ are $K \times 1$ vectors of channel estimate and antenna weights for an $m^{\text{th}}$ user equipment in the $l^{\text{th}}$ frequency channel.

In one embodiment, the reallocation logic is operable to reallocate that data transmission to another frequency channel by selecting a frequency channel determined to have a minimum signal to interference plus noise ratio of the frequency channels allocatable by the base station.

In one embodiment, the reallocation logic is operable to reallocate that data transmission to another frequency channel by selecting a frequency channel determined in accordance with the following algorithm:

$$\{l_m, m = 1, \ldots, M\} = \max \min_{l,m} \mathrm{SINR}_{lm} \qquad \text{(Equation 3)}$$

where $l_m$ is a selected frequency channel for the $m^{th}$ user equipment and $M$ is the number of user equipment supported by that base station.

In one embodiment, the reallocation logic is operable to reallocate that data transmission and at least one other data transmission to other frequency channels by selecting frequency channels determined to have minimum signal to interference plus noise ratios of frequency channels allocatable by the base station.

In one embodiment, the reallocation logic is operable to reallocate that and at least one other data transmission to other frequency channels having the maximum signal to interference plus noise ratio from amongst the frequency channels by selecting frequency channels determined accordance with the following algorithm:

$$\{l_m, m = 1, \ldots, M\} = \max_l \mathrm{SINR}_{lm} \qquad \text{(Equation 4).}$$

In one embodiment, a transmission power for each user equipment is determined in accordance with the following algorithms:

$$p_m = \frac{\dfrac{P}{\mathrm{SINR}_{l_m m}}}{\displaystyle\sum_{q=1}^{M} \dfrac{1}{\mathrm{SINR}_{l_q q}}}, m = 1, \ldots, M \qquad \text{(Equation 5)}$$

where $P_m$ is a selected power for the $m^{th}$ user equipment and

$$P = \sum_{m=1}^{M} p_m \qquad \text{(Equation 6)}$$

is the total power constraint for the base station.

In one embodiment, the receiver is operable monitoring current data transmission interference during a base station listening interval arranged to occur pseudo-randomly.

In one embodiment, the reallocation logic is operable to minimise reallocations of data transmission to another frequency channel in order to minimise changes to the data transmission interference.

According to a third aspect of the present invention there is provided a communications system comprising: a plurality of the base stations of the second aspect; and a plurality of the user equipment.

According to a fourth aspect of the present invention there is provided a computer program product operable, when executed on a computer, to perform the method steps of the first aspect.

Further particular and preferred aspects of the present invention are set out in the accompanying independent and dependent claims. Features of the dependent claims may be combined with features of the independent claims as appropriate, and in combinations other than those explicitly set out in the claims.

BRIEF DESCRIPTION OF THE DRAWINGS

Embodiments of the present invention will now be described further, with reference to the accompanying drawings, in which:

Figure 1 illustrates a communication system incorporating a base station and user equipment according to one embodiment;
Figure 2 illustrates components of the base stations shown in Figure 1;
Figure 3 is a flow diagram illustrating the main frequency channel allocation processing steps of the base station illustrated in Figure 2;

Figure 4 is a timing diagram illustrating uncoordinated listening and transmission intervals for the different subsystems illustrated in Figure 1;
Figure 5 illustrates typical adaptation curves based on a first search algorithm for different channel realisations;
Figure 6 illustrates cumulative distribution function results for minimum rate performance; and
Figure 7 illustrates cumulative distribution functions for convergence speed.

DESCRIPTION OF THE EMBODIMENTS

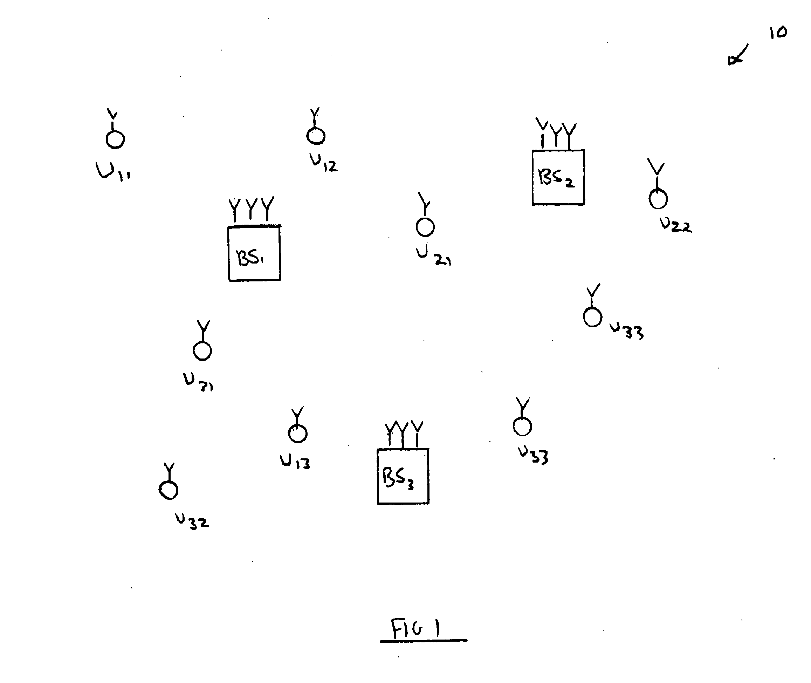

Figure 1 illustrates a communication system, generally 10, comprising 3 base station $BS_1$, $BS_2$, $BS_3$. Each base station has a multiple-antenna array which contains a number of antenna. Each base station has associated therewith a number of user equipment, in this example each base station has associated therewith three user equipment. For example, base station $BS_1$ has associated therewith user equipment $U_{11}$, $U_{12}$ and $U_{13}$. Likewise, base station $BS_2$ has associated therewith user equipment $U_{21}$, $U_{22}$ and $U_{23}$, whilst base stations $BS_3$ has associated therewith user equipment $U_{31}$, $U_{32}$ and $U_{33}$.

Each base station and its associated user equipment can be considered as an autonomous, separate subsystem of the communication system 10. User equipment communicate with the base station over frequency channels allocated to the user equipment by the base station. The base station sends control information to the user equipment which informs the user equipment of the frequency channel to use, transmit powers, together with any necessary timing information.

Each base station can allocate frequency channels from the same set of total frequency channels. That is to say that each base station is competing to use the available frequency channels. Each base station determines the frequency channels to be allocated using algorithms which utilises interference information gathered during a listening interval to determine which of the total available frequency channels provides the most efficient interference cancellation in the current interference environment, as will be explained in more detail below.

In order to improve the stability and convergence of the communication system 10, only when an interference cancellation efficiency of a currently allocated frequency channel falls below a predetermined threshold does the associated base station select a new frequency channel to which the data transmission from user equipment is to be reallocated. That is to say that the base stations accept that a slight degradation in interference efficiency cancellation is permitted to occur and that each base station will not necessarily communicate using the absolute optimum frequency channels for that base station if an adequate quality of service is being provided. Also, the number of frequency channel changes is minimised in order to minimise changes to the current data transmission interference. This helps to ensure that any potential detrimental changes to the interference environment for other bas stations as a result of an optimisation and frequency channel change by a base station only occurs when absolutely necessary to maintain the required quality of service to user equipment. This helps to improve the stability of the transmission channel allocated by each base station throughout the communication system 10.

Each base station has multiple antennas. Base stations periodically adapt their antenna weightings and generates a Wiener filter to extract the desired data.

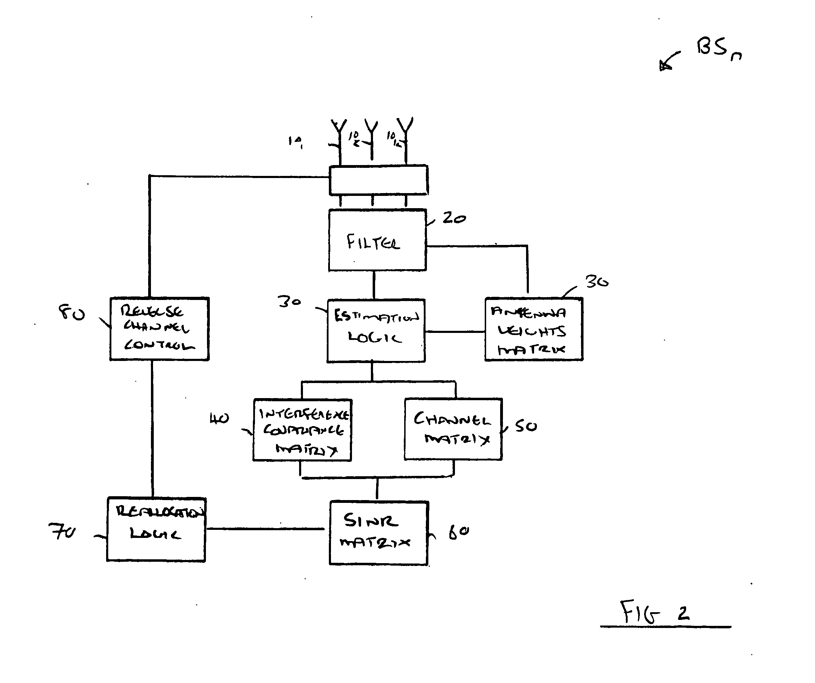

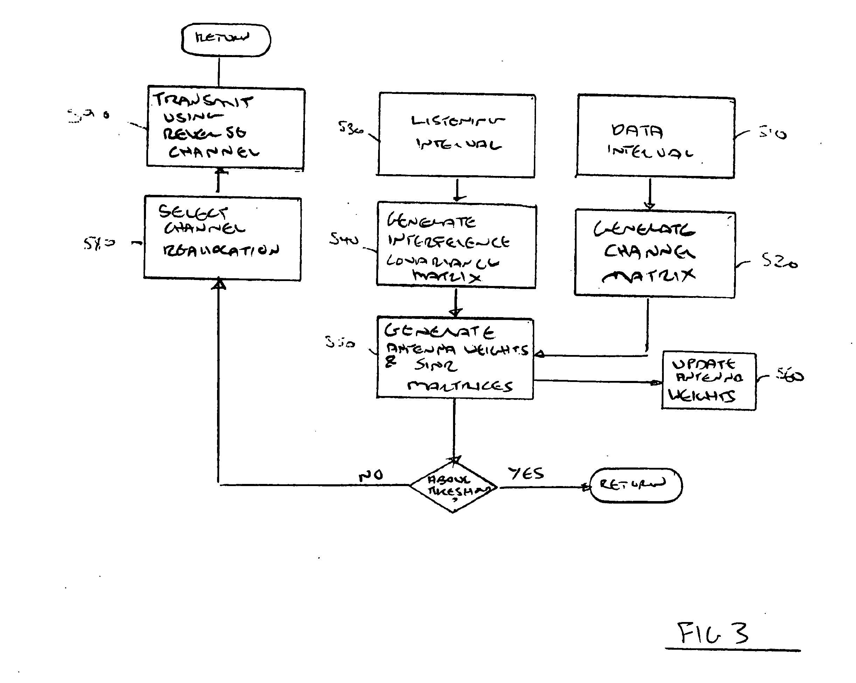

Figure 2 illustrates components of the base stations and Figure 3 illustrates the operation of the base station in more detail.

A plurality of antennas $10_l$ to $10_K$ are provided. Signals from the multiple antennas are received by a filter 20. The filter 20 applies antenna weights provided by an antenna weights matrix 30 to extract the required signals.

At step S10, during a transmission interval for that base station, the filter 20 provides the received signals to the estimation logic 30. At step S20, the estimation logic 30 performs an estimator of channels and generates a channel matrix 50 (a K multiplied by 1 complex number vector), which provides attenuation and phase of change information for the received signals.

At step S30, during a base station listening interval, the received signals extracted by the filter 20 are provided to estimation logic 30. At step S40, the estimation logic 30 estimates an interference covariance for all received frequency channels and generates an interference covariance matrix 50 using the following algorithm:

$$\hat{\mathbf{R}}_l = N^{-1}\mathbf{X}_l\mathbf{X}_l^*, l = 1,\ldots,L \qquad \text{(Equation 1)}$$

where $\mathbf{X}_l$ is a $K \times N$ matrix of the signal received in the $l^{\text{th}}$ frequency channel during a listening interval when all user equipment associated with the base station do not transmit, $L$ is the number of frequency channels allocatable by said base station, $K$ is the number of base station receive antennas, $N$ is the number of samples and $(\cdot)^*$ is a conjugate transposition operation.

At step S50, the estimation logic 30 utilises the channel matrix 50 to generate the antenna weights matrix 30.

The newly generated antenna weights matrix 30 is utilised at step S60 to update the antenna weights which are used by the filter 20 during the next transmission interval. Also, at step S50, the estimation logic 30 utilises the channel matrix 50 and the interference covariance matrix 40 to generate the signal to interference plus noise ratio matrix 60 in accordance with the following algorithm:

$$\text{SINR}_{lm} = \hat{\mathbf{h}}_{lm}^{*} \hat{\mathbf{R}}_{l}^{-1} \mathbf{h}_{lm} \qquad \text{(Equation 2)}$$

where $\hat{\mathbf{h}}_{lm}$ and $\hat{\mathbf{w}}_{lm}$ are $K \times 1$ vectors of channel estimate and antenna weights for an $m^{th}$ user equipment in the $l^{th}$ frequency channel. The generation of both of these matrices occurs during the listening period of the base station.

Also during the listening interval, at step S60, the reallocation logic 70 determines whether any of the currently allocated frequency channels for the base station failed to achieve a predetermined desired quality of service by determining whether the signal to interference plus noise ratio matrix 60 indicates that the interference cancellation efficiency fails to meet a predetermined threshold level.

If all of the channels achieve the required threshold level and therefore achieve the desired quality of service, then no further action is taken and processing returns to step S10 where the channel matrix 50 is regenerated during the next transmission interval.

In the event that at least one of the allocated channels fails to achieve the required level then, at step S80, the reallocation logic 70 utilises the signal to interference plus noise ratio matrix 60 to select those frequency channels which provide improved signal to interference plus noise ratios and therefore a better quality of service for the user equipment using a channel reallocation algorithm.

Two different channel reallocation algorithms may be utilised. One of the channel reallocation algorithms performs an exhaustive search in accordance with:

$$\{l_{m}, m = 1, \ldots, M\} = \max_{l,m} \min \text{SINR}_{lm} \qquad \text{(Equation 3)}$$

where $l_m$ is a selected frequency channel for the $m^{th}$ user equipment and $M$ is the number of user equipment supported by that base station. Although this algorithm achieves optimal frequency channel allocation, a relatively high computational overhead is incurred in executing this algorithm.

Accordingly, a second channel reallocation algorithm may be performed which provides a simplified search to select frequency channels having the maximum signal to interference plus noise ratio from amongst the frequency channels for each user separately in accordance with:

$$\{l_{m}, m = 1, \ldots, M\} = \max_{l} \text{SINR}_{lm} \qquad \text{(Equation 4)}.$$

In addition to the frequency channel allocation according to Equations 3 or 4, a power transmission selection can be applied for further performance improvement in accordance with:

$$p_{m} = \frac{\dfrac{P}{\text{SINR}_{l_{m}m}}}{\displaystyle\sum_{q=1}^{M} \dfrac{1}{\text{SINR}_{l_{q}q}}}, m = 1, \ldots, M \qquad \text{(Equation 5)}$$

where $P_m$ is a selected power for the $m^{th}$ user equipment and

$$P = \sum_{m=1}^{M} p_{m} \qquad \text{(Equation 6)}$$

is the total power constraint for the base station. It will be appreciated that the transmission power selection may be applied in combination with other frequency channel search algorithms.

As will be apparent from the simulation results shown below, this simplified algorithm achieves an acceptable channel allocation, but at a much reduced processing overhead.

The reallocation logic 70 also determines transmit powers and any other control information using the channel matrix 50. This information is then transmitted at step S90 to the user equipment using reverse channel control logic 80 via the multiple antenna array. Processing then returns to step S10 where the channel matrix 50 is regenerated during the next transmission interval.

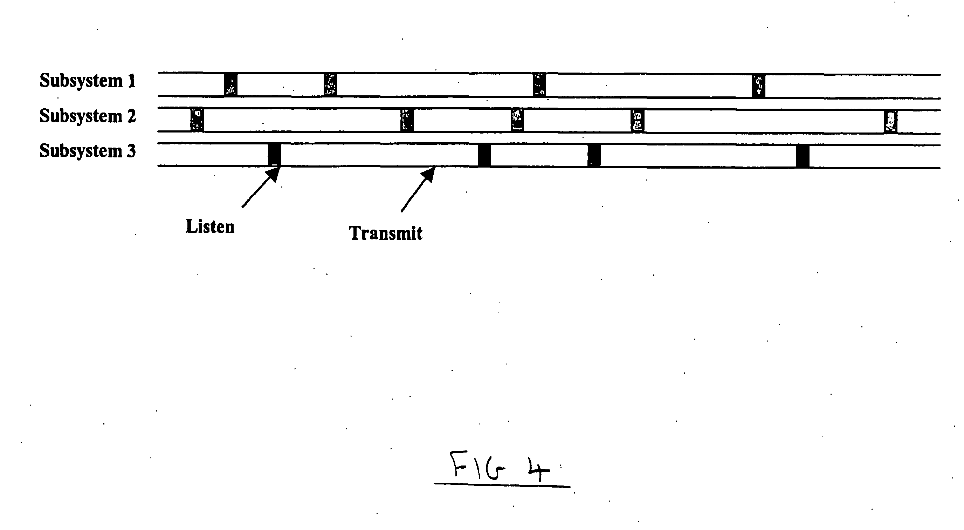

Figure 4 illustrates the uncoordinated listening and data transmission intervals for different sub-systems. As can be seen, the period of time during which a base station listens is comparatively significantly less than the time spent communicating. This reduces the likelihood of more than one listening interval for different base stations occurring at the same time. Also, the listening interval is set to occur pseudo-randomly which further reduces the likelihood of listening intervals for two different base stations occurring at the same time. Through this approach, the likelihood of receiving a representative interference picture during a listening interval can be improved.

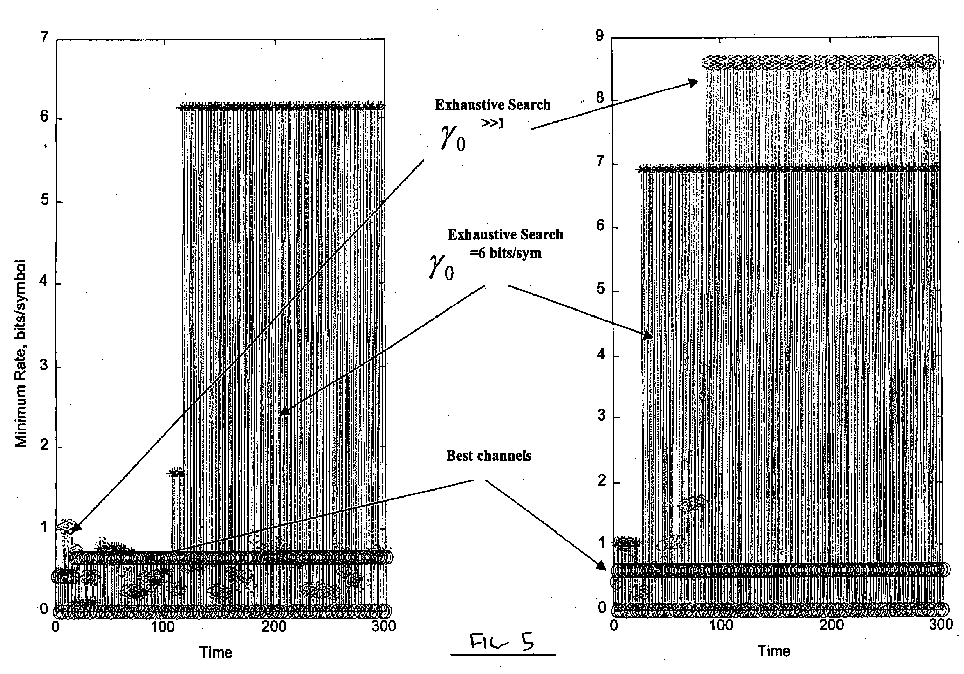

Figure 5 shows the results of simulations showing the typical adaptation curves for different channel realisations. The curves show the performance of a "best channels" WiMax-type system (which seeks to always achieve the best possible frequency channel allocation for every user), and the exhaustive search channel reallocation algorithm using two different threshold levels yo.

The simulation results are based on the following assumptions: one weight vector is used in one frequency channel (i.e. all sub-systems are narrowband); long estimation intervals are provided leading to the known channel estimate matrices and interference covariance matrices; all propagation channels are simulated as independent Gaussian vectors with unit power and zero mean; five base stations and four user equipment per base stations; six frequency channels (bands) and four antennas for all base stations; a signal to noise ratio (SNR) of 23dB. The system efficiency metric (minimum rate) in bits per symbol is based on the signal to interference plus noise ratio for the poorest user and is estimated over the whole system in accordance with the following algorithm:

$$\gamma = \min_{n=1,\ldots,N; m=1,\ldots,M} [1 + \log_2(\mathrm{SINR}_{nl_m m})] \qquad \text{(Equation 7)}$$

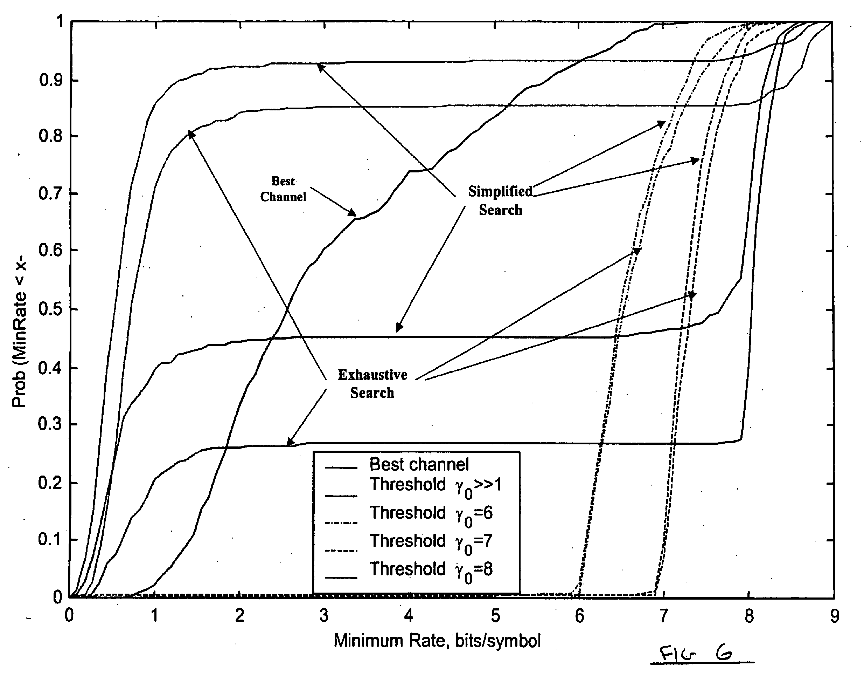

Figure 6 shows the cumulative distribution functions for the minimum rate performance for the "best channels" WiMax-type system and both the exhaustive search channel reallocation algorithm and the simplified search channel reallocation algorithm using four different threshold levels $\gamma 0$.

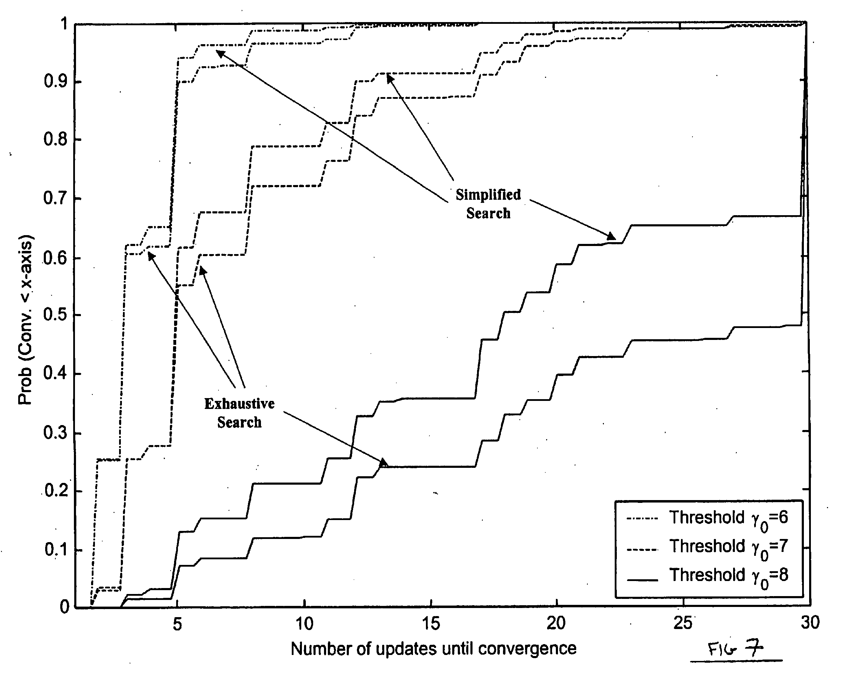

Figure 7 shows the convergence speed for both the exhaustive search channel reallocation algorithm and the simplified search channel reallocation algorithm using three different threshold levels $\gamma 0$.

As can be seen the embodiments demonstrate significant performance improvement, minimum rate performance and convergence speed can be controlled through threshold selection. Uncontrolled self-optimisation ($\gamma 0$ is significantly greater than 1) leads to the best results for some channel realisations, but convergence cannot be guaranteed for other channel realisations. As can be seen there is a trade-off between minimum rate performance and convergence speed. Furthermore, the simplified scheme gives results which are close to that of the exhaustive search scheme, but this algorithm is significantly less complicated computationally.

Accordingly, it can be seen that embodiments provide a local (subsystem-based) self-organization of the cognitive network by means of adaptive selection of the bands and transmit powers based on the on-line estimation of the interference cancellation efficiency at the base stations during listening intervals. On-line local selection of the bands and transmit powers independently for different subsystems creates a non-stationary interference environment. To control convergence of the self-organized cognitive network, the band and power adaptation is allowed only for subsystems with the interference cancellation efficiency measured in terms of signal to interference plus noise ratio or QoS below the required level. Users of all subsystems transmit their signals using bands and powers defined by their base stations. During listening intervals (nonoverlapping for different subsystems or overlapping with low probability) each base station estimates the interference covariance matrices for all available bands. Covariance matrices for the currently used bands together with the corresponding channel estimates are used for estimation of the antenna weights and some measure of QoS or interference cancellation efficiency, i.e., in terms of SINR. If the efficiency is above the threshold, then users continue using their current settings and each base station applies the new antenna weights for reception after the listening interval (next data interval). If the efficiency is below the threshold, then that base station initiates estimations of all the channels in all the available bands, selects the best bands according to a selection criterion, calculates the transmit powers for all the users and sends this control information back to the users to force them to update their bands and powers. One way to introduce data and listening intervals with low probability of overlapping of the listening intervals for different subsystems is by using a random duration of data burst independent for different subsystems.

Embodiments provide self-optimized (cognitive) multi-band multi-user wireless systems which can be utilised in license-exempt spectrum to control QoS for uncoordinated mutually interfering subsystems. This allows simultaneous transmission for users from different subsystems in one band by means of self-optimization of the occupied bands and transmit powers with controlled efficiency of interference cancellation at subsystem base stations equipped with multiple antennas.

In this way, channel selection is based on the ability to cancel interference rather than interference power levels. This is because selecting channels based on interference power levels can lead to a channel being selected in which, although having low levels of interference, is in fact highly correlated with an interfering transmission and a guarantee cannot be made that some of the interfering signals from other subsystems will not propagate through the frequency channels highly correlated with the selected frequency channel for the data transmission which can lead to significant performance degradation, making it impossible to guarantee that a required quality of service can be achieved. However, by selecting a frequency channel based on interference cancellation factors, co-linearity between data transmissions on the selected frequency channels and data transmission on interfering frequency channels can be avoided. Although this can lead to the situation where a channel having a relatively high interference power level is selected over a channel having a relatively low interference power level, that channel having the relatively high interference power level may be cancelled more efficiently than the channel having the relatively low interference power level. Hence, frequency channel selection uses knowledge of the efficiency of interference cancellation between channels, rather than just assuming that the channel having the lowest interference power will achieve the highest quality service levels. This approach helps to ensure that interfering signals from other subsystems do not propagate through the channels highly correlated with the frequency channel selected for the data transmissions which helps to improve overall quality of service levels.

Although illustrative embodiments of the invention have been disclosed in detail herein, with reference to the accompanying drawings, it is understood that the invention is not limited to the precise embodiments shown and that various changes and modifications can be effected therein by one skilled in the art without departing from the scope of the invention as defined by the appended claims.

**Claims**

1. A method of controlling interference of data transmissions over frequency channels allocated to user equipment ($U_{11-33}$) by a base station ($BS_n$), said method comprising the steps of:

   (i) monitoring (S30) at said base station current data transmission interference;
   (ii) determining (S40) at said base station an interference cancellation efficiency achievable for data transmissions over frequency channels allocatable to said user equipment by said base station; and
   (iii) for data transmissions over each frequency channel currently allocated which fail to achieve a predetermined interference cancellation efficiency, reallocating (S80) that data transmission to another frequency channel, said another frequency channel being determined by said base station to have an improved interference cancellation efficiency.

2. The method as claimed in claim 1, wherein said step (ii) comprises determining an interference cancellation efficiency achievable by estimating a signal to interference plus noise ratio for data transmissions over each frequency channel allocatable to said user equipment by said base station.

3. The method as claimed in claim 1, wherein said step (i) comprises monitoring current data transmission interference by generating an estimated interference covariance matrix for all frequency channels allocatable by said base station and said step (ii) comprises determining an interference cancellation efficiency achievable by estimating a signal to interference plus noise ratio for each frequency channel allocatable to said user equipment by said base station using said estimated interference covariance matrix.

4. The method as claimed in claim 1, wherein said step (i) comprises monitoring current data transmission interference by generating an estimated interference covariance matrix for all frequency channels allocatable by said base station and by generating a phase change and attenuation estimate for each propagation channel of said frequency channels and said step (ii) comprises determining an interference cancellation efficiency achievable by estimating a signal to interference plus noise ratio for each frequency channel allocatable to said user equipment by said base station using said estimated interference covariance matrix and said phase change and attenuation estimate.

5. The method as claimed in claim 4, wherein said estimated interference covariance matrix $\hat{\mathbf{R}}_{i'}$ is calculated in

accordance with the following algorithm:

$$\hat{\mathbf{R}}_l \doteq N^{-1}\mathbf{X}_l\mathbf{X}_l^{\bullet}, l = 1,\dots,L \qquad \text{(Equation 1)}$$

where $\mathbf{X}_t$ is a $K \times N$ matrix of the signal received in the $l^{th}$ frequency channel during a listening interval when all user equipment associated with said base station do not transmit, $L$ is the number of frequency channels allocatable by said base *station, K* is the number of base station receive antennas, $N$ is the number of samples and (-)* is a conjugate transposition operation.

6. The method as claimed in claim 5, wherein said signal to interference plus noise ratio $SINR_{lm}$ for the $m^{th}$ user equipment in the $l^{th}$ frequency channel is calculated in accordance with the following algorithm:

$$SINR_{lm} = \hat{\mathbf{h}}_{lm}^{\bullet}\hat{\mathbf{R}}_l^{-1}\mathbf{h}_{lm} \qquad \text{(Equation 2)}$$

where $\hat{\mathbf{h}}_{lm}$ and $\hat{\mathbf{w}}_{lm}$ are $K \times 1$ vectors of channel estimate and antenna weights for an $m^{th}$ user equipment in the $l^{th}$ frequency channel.

7. The method as claimed in claim 3, wherein said step (iii) comprises reallocating that data transmission to another frequency channel by selecting a frequency channel determined to have a minimum signal to interference plus noise ratio of said frequency channels allocatable by said base station.

8. The method as claimed in claim 7, wherein said step (iii) comprises reallocating that data transmission to another frequency channel by selecting a frequency channel determined in accordance with the following algorithm:

$$\{l_m, m = 1,\dots,M\} = \max_{l,m} \min SINR_{lm} \qquad \text{(Equation 3)}$$

where $l_m$ is a selected frequency channel for the $m^{th}$ user equipment and $M$ is the number of user equipment supported by that base station.

9. The method as claimed in claim 3, wherein said step (iii) comprises reallocating that data transmission and at least one other data transmission to other frequency channels by selecting frequency channels determined to have minimum signal to interference plus noise ratios of frequency channels allocatable by said base station.

10. The method as claimed in claim 3, wherein said step (iii) comprises reallocating that and at least one other data transmission to other frequency channels having the maximum signal to interference plus noise ratio from amongst the frequency channels by selecting frequency channels and by selecting a transmission power, both determined accordance with the following algorithm:

$$\{l_m, m = 1, \text{K}, M\} = \max_{l} SINR_{lm} \qquad \text{(Equation 4)}.$$

11. The method as claimed in claim 1, further comprising:

selecting a transmission power for each user equipment in accordance with the following algorithms:

$$p_m = \frac{\dfrac{P}{\mathrm{SINR}_{l_m m}}}{\displaystyle\sum_{q=1}^{M} \dfrac{1}{\mathrm{SINR}_{l_q q}}}, m = 1, \mathrm{K}, \mathrm{M} \qquad \text{(Equation 5)}$$

where $P_m$ is a selected power for the $m^{\text{th}}$ user equipment and

$$P = \sum_{m=1}^{M} p_m \qquad \text{(Equation 6)}$$

is the total power constraint for the base station.

12. The method as claimed in claim 1, wherein said step (i) comprises monitoring at said base station current data transmission interference during a base station listening interval arranged to occur pseudo-randomly.

13. The method as claimed in claim 1, wherein said step (iii) comprises minimising reallocations of data transmission to another frequency channel in order to minimise changes to said data transmission interference.

14. A base station ($BS_n$) operable to control interference of data transmissions over frequency channels allocated to user equipment ($U_{11-33}$) by said base station, said base station comprising:

   a receiver operable to monitor current data transmission interference;
   estimation logic (30) operable to determine an interference cancellation efficiency achievable for data transmissions over frequency channels allocatable to said user equipment by said base station; and
   reallocation logic (70) operable to determine whether data transmissions over each frequency channel currently allocated fail to achieve a predetermined interference cancellation efficiency and, if so, to reallocate that data transmission to another frequency channel, said another frequency channel being selected to have an improved interference cancellation efficiency.

15. A computer program product operable, when executed on a computer, to perform the method steps as claimed in claim 1.

**Patentansprüche**

1. Verfahren zur Steuerung der Interferenz von Datenübertragungen über von einer Basisstation ($BS_n$) einem Benutzerendgerät ($U_{11-33}$) zugeordnete Frequenzkanäle, wobei das besagte Verfahren die folgenden Schritte umfasst:

   (i) Überwachen (S30), an der besagten Basisstation, der aktuellen Datenübertragungsinterferenz;
   (ii) Ermitteln (S40), an der besagten Basisstation, einer erreichbaren Interferenzunterdrückungseffizienz für Datenübertragungen über Frequenzkanäle, die durch die besagte Basisstation dem besagten Benutzerendgerät zuordbar sind; und
   (iii) für Datenübertragungen über jeden aktuell zugeordneten Frequenzkanal, welche eine vorgegebene Interferenzunterdrückungseffizienz unterschreiten, Neuzuordnen (S80) dieser Datenübertragung zu einem anderen Frequenzkanal, wobei die besagte Basisstation bestimmt, dass der besagte andere Frequenzkanal eine verbesserte Interferenzunterdrückungseffizienz aufweist.

2. Verfahren nach Anspruch 1, wobei der besagte Schritt (ii) das Ermitteln einer erreichbaren Interferenzunterdrückungseffizienz durch Schätzen eines Signal-zu-Interferenz-plus-Rauschverhältnisses für Datenübertragungen über jeden dem besagten Benutzerendgerät durch die besagte Basisstation zuordbaren Frequenzkanal umfasst.

3. Verfahren nach Anspruch 1, wobei der besagte Schritt (i) das Überwachen der aktuellen Datenübertragungsinterferenz durch Erzeugen einer geschätzten Interferenzkovarianzmatrix für alle durch die besagte Basisstation zuordbaren Frequenzkanäle umfasst, und der besagte Schritt (ii) das Ermitteln einer erreichbaren Interferenzunterdrückungseffizienz durch Schätzen eines Signal-zu-Interferenz-plus-Rauschverhältnisses für jeden durch die besagte Basisstation dem besagten Benutzerendgerät zuordbaren Frequenzkanal unter Verwendung der besagten geschätzten Interferenzkovarianzmatrix umfasst.

4. Verfahren nach Anspruch 1, wobei der besagte Schritt (i) das Überwachen der aktuellen Datenübertragungsinterferenz durch Erzeugen einer geschätzten Interferenzkovarianzmatrix für alle durch die besagte Basisstation zuordbaren Frequenzkanäle und durch Erzeugen einer Phasenänderungs- und Dämpfungsschätzung für jeden Ausbreitungskanal der besagten Frequenzkanäle umfasst, und der besagte Schritt (ii) das Ermitteln einer erreichbaren Interferenzunterdrückungseffizienz durch Schätzen eines Signal-zu-Interferenz-plus-Rauschverhältnisses für jeden durch die besagte Basisstation dem besagten Benutzerendgerät zuordbaren Frequenzkanal unter Verwendung der besagten geschätzten Interferenzkovarianzmatrix und der besagten Phasenänderungs- und Dämpfungsschätzung umfasst.

5. Verfahren nach Anspruch 4, wobei die besagte geschätzte Interferenzkovarianzmatrix $\square_l$, gemäß dem folgenden Algorithmus berechnet wird:

$$\hat{R}_l \doteq N^{-1} X_l X_l^*, l = 1, \dots, L \qquad \text{(Gleichung 1)}$$

wobei $X_l$ eine $K \times N$ Matrix des in dem $l^{ten}$ Frequenzkanal während eines Abhörintervalls, wenn kein mit der besagten Basisstation assoziiertes Benutzerendgerät überträgt, empfangenen Signals ist, $L$ die Anzahl der durch die besagte Basisstation zuordbaren Frequenzkanäle ist, $K$ die Anzahl der Basisstations-Empfangsantennen ist, $N$ die Anzahl der Abtastwerte ist, und $(\cdot)^*$ eine konjugierte Umsetzungsoperation ist.

6. Verfahren nach Anspruch 5, wobei das besagte Signal-zu-Interferenz-plus-Rauschverhältnis $\text{SINR}_{lm}$ für das $m^{te}$ Benutzergerät in dem $l^{ten}$ Frequenzkanal gemäß dem folgenden Algorithmus berechnet wird:

$$\text{SINR}_{lm} = \hat{b}_{lm}^* \hat{R}_l^{-1} b_{lm} \qquad \text{(Gleichung 2)}$$

wobei $\hat{b}_{\text{tun}}$ und $\hat{w}_{\text{tun}}$ $K \times 1$ Vektoren von Kanalschätzung und Antennengewichten für ein $m^{tes}$ Benutzerendegerät in dem $l^{ten}$ Frequenzkanal sind.

7. Verfahren nach Anspruch 3, wobei der besagte Schritt (iii) das Neuzuordnen dieser Datenübertragung zu einem anderen Frequenzkanal durch Auswählen eines Frequenzkanals, für welchen ein minimales Signal-zu-Interferenzplus-Rauschverhältnis ermittelt wurde, aus den besagten durch die besagte Basisstation zuordbaren Frequenzkanälen umfasst.

8. Verfahren nach Anspruch 7, wobei der besagte Schritt (iii) das Neuzuordnen dieser Datenübertragung zu einem anderen Frequenzkanal durch Auswählen eines gemäß dem folgenden Algorithmus bestimmten Frequenzkanals umfasst:

$$\{l_m, m = 1, \dots, M\} = \max \min_{l,m} \text{SINR}_{lm} \qquad \text{(Gleichung 3)}$$

wobei $l_m$ ein ausgewählter Frequenzkanal für das $m^{te}$ Benutzerendgerät ist, und $M$ die Anzahl der von dieser Basisstation unterstützten Benutzerendgeräte ist.

9. Verfahren nach Anspruch 3, wobei der besagte Schritt (iii) das Neuzuordnen dieser Datenübertragung und mindestens einer anderen Datenübertragung zu anderen Frequenzkanälen durch Auswählen von Frequenzkanälen, für welche ein minimales Signal-zu-Interferenz-plus-Rauschverhältnis ermittelt wurde, aus durch die besagte Basisstation zuordbaren Frequenzkanälen umfasst.

**10.** Verfahren nach Anspruch 3, wobei der besagte Schritt (iii) das Neuzuordnen dieser und mindestens einer anderen Datenübertragung zu anderen Frequenzkanälen, welche das höchste Signal-zu-Interferenz-plus-Rauschverhältnis unter den Frequenzkanälen aufweisen, durch Auswählen der Frequenzkanäle und durch Auswählen einer Übertragungsleistung, welche jeweils gemäß dem folgenden Algorithmus bestimmt werden, umfasst:

$$\{I_m, m = 1, K, M\} = \max_p SINR_{f_m} \qquad \text{(Gleichung 4)}.$$

**11.** Verfahren nach Anspruch 1, weiterhin umfassend:

Auswählen einer Übertragungsleistung für jedes Benutzerendgerät gemäß den folgenden Algorithmen:

$$p_m = \frac{\dfrac{P}{SINR_{l_m}}}{\sum_{q=1}^{M} \dfrac{1}{SINR_{l_q}}}, m = 1, K, M \qquad \text{(Gleichung 5)}$$

wobei $P_m$ eine ausgewählte Leistung für das m$^{te}$ Benutzerendgerät ist, und

$$P = \sum_{m=1}^{M} p_m \qquad \text{(Gleichung 6)}$$

die Gesamtleistungsbeschränkung für die Basisstation ist.

**12.** Verfahren nach Anspruch 1, wobei der besagte Schritt (i) das Überwachen, an der besagten Basisstation, der aktuellen Datenübertragungsinterferenz während eines Basisstations-Abhörintervalls, welcher pseudozufällig stattfindet, umfasst.

**13.** Verfahren nach Anspruch 1, wobei der besagte Schritt (iii) das Minimieren der Neuzuordnungen von Datenübertragungen zu einem anderen Frequenzkanal umfasst, um Veränderungen der besagten Datenübertragungsinterferenz zu minimieren.

**14.** Basisstation (BS$_n$), betreibbar für die Steuerung von Interferenzen der Datenübertragungen über durch die besagte Basisstation einem Benutzerendgerät (U$_{11-33}$) zugeordnete Frequenzkanäle, wobei die besagte Basisstation umfasst:

Einen Empfänger, betreibbar für die Überwachung der aktuellen Datenübertragungsinterferenz, Schätzungslogik (30), betreibbar für die Ermittlung einer erreichbaren Interferenzunterdrückungseffizienz für Datenübertragungen über durch die besagte Basisstation dem besagten Benutzerendgerät zuordbare Frequenzkanäle; und Neuzuordnungslogik (70), betreibbar, um zu ermitteln, ob Datenübertragungen über jeden aktuell zugeordneten Frequenzkanal eine vorgegebene Interferenzunterdrückungseffizienz unterschreiten, und, wenn dies der Fall ist, diese Datenübertragung einem anderen Frequenzkanal zuzuordnen, wobei der besagte andere Frequenzkanal derart ausgewählt wird, dass er eine verbesserte Interferenzunterdrückungseffizienz aufweist.

**15.** Computerprogramm-Produkt, betreibbar für das Durchführen der Verfahrensschritte gemäß Anspruch 1, wenn es auf einem Computer ausgeführt wird.

**Revendications**

1. Procédé de commande des interférences aux transmissions de données sur des canaux de fréquence attribués à un équipement d'utilisateur ($U_{11-33}$) par une station de base ($BS_n$), ledit procédé comprenant les étapes suivantes :

   (i) surveillance (S30) des interférences à la transmission de données actuelle au niveau de ladite station de base ;
   (ii) détermination (S40) au niveau de ladite station de base d'une efficacité de l'annulation des interférences pouvant être obtenue pour les transmissions de données sur les canaux de fréquence pouvant être attribués audit équipement d'utilisateur par ladite station de base ; et
   (iii) pour les transmissions de données sur chaque canal de fréquence actuellement attribué qui échoue à obtenir une efficacité prédéterminée de l'annulation des interférences, réattribution (S80) de cette transmission de données à un autre canal de fréquence, ledit autre canal de fréquence étant déterminé par ladite station de base comme ayant une efficacité d'annulation des interférences améliorée.

2. Procédé selon la revendication 1, selon lequel ladite étape (ii) comprend la détermination d'une efficacité de l'annulation des interférences pouvant être obtenue en estimant un rapport entre le signal et les interférences plus le bruit pour les transmissions de données sur chaque canal de fréquence pouvant être attribué audit équipement d'utilisateur par ladite station de base.

3. Procédé selon la revendication 1, selon lequel ladite étape (i) comprend la surveillance des interférences à la transmission de données actuelle en générant une matrice de covariance d'interférences estimées pour tous les canaux de fréquence pouvant être attribués par ladite station de base et ladite étape (ii) comprend la détermination d'une efficacité de l'annulation des interférences pouvant être obtenue en estimant un rapport entre le signal et les interférences plus le bruit pour chaque canal de fréquence pouvant être attribué audit équipement d'utilisateur par ladite station de base en utilisant ladite matrice de covariance d'interférences estimées.

4. Procédé selon la revendication 1, selon lequel ladite étape (i) comprend la surveillance des interférences à la transmission de données actuelle en générant une matrice de covariance d'interférences estimées pour tous les canaux de fréquence pouvant être attribués par ladite station de base et en générant une estimation du changement de phase et de l'atténuation pour chaque canal de propagation desdits canaux de fréquence et ladite étape (ii) comprend la détermination d'une efficacité de l'annulation des interférences pouvant être obtenue en estimant un rapport entre le signal et les interférences plus le bruit pour chaque canal de fréquence pouvant être attribué audit équipement d'utilisateur par ladite station de base en utilisant ladite matrice de covariance d'interférences estimées et ladite estimation du changement de phase et de l'atténuation.

5. Procédé selon la revendication 4, selon lequel ladite matrice de covariance d'interférences estimées R est calculée conformément à l'algorithme suivant :

$$\hat{\mathbf{R}}_l = N^{-1}\mathbf{X}_l\mathbf{X}_l^*, l = 1,\dots,L \qquad \text{(Équation 1)}$$

où $X_l$ est une matrice K x N du signal reçu dans le $l^{\text{ème}}$ canal de fréquence pendant un intervalle d'écoute quand tous les équipements d'utilisateur associés avec ladite station de base n'émettent pas, L est le nombre de canaux de fréquence qui peuvent être attribués par ladite station de base, K est le nombre d'antennes de réception de la station de base, N est le nombre d'échantillons et ( )* est une opération de transposition conjuguée.

6. Procédé selon la revendication 5, selon lequel ledit rapport entre le signal et les interférences plus le bruit $SINR_{lm}$ pour le même équipement d'utilisateur dans le $l^{\text{ème}}$ canal de fréquence est calculé conformément à l'algorithme suivant :

$$SINR_{lm} = \hat{\mathbf{b}}_{lm}^*\hat{\mathbf{R}}_l^{-1}\hat{\mathbf{b}}_{lm} \qquad \text{(Équation 2)}$$

où $\hat{\mathbf{b}}_{tm}$ et $\hat{\mathbf{w}}_{lm}$ sont K x I vecteurs de l'estimation du canal et du poids de l'antenne pour un $m^{\text{ème}}$ équipement d'utilisateur dans le $l^{\text{ème}}$ canal de fréquence.

**7.** Procédé selon la revendication 3, selon lequel ladite étape (iii) comprend la réallocation de cette transmission de données à un autre canal de fréquence en sélectionnant un canal de fréquence déterminé comme ayant un rapport entre le signal et les interférences plus le bruit minimum parmi lesdits canaux de fréquence pouvant être attribués par ladite station de base.

**8.** Procédé selon la revendication 7, selon lequel ladite étape (iii) comprend la réallocation de cette transmission de données à un autre canal de fréquence en sélectionnant un canal de fréquence déterminé conformément à l'algorithme suivant :

$$\{l_m, m = 1, \ldots, M\} = \max_{l_m} \min \mathrm{SINR}_{l_m} \qquad \text{(Équation 3)}$$

où $l_m$ est un canal de fréquence sélectionné pour le même équipement d'utilisateur et M est le nombre d'équipements d'utilisateur pris en charge par cette station de base.

**9.** Procédé selon la revendication 3, selon lequel ladite étape (iii) comprend la réallocation de cette transmission de données et d'au moins une autre transmission de données à d'autres canaux de fréquence en sélectionnant les canaux de fréquence déterminés comme ayant des rapports entre le signal et les interférences plus le bruit minimums parmi les canaux de fréquence pouvant être attribués par ladite station de base.

**10.** Procédé selon la revendication 3, selon lequel ladite étape (iii) comprend la réallocation de cette transmission de données et d'au moins une autre transmission de données à d'autres canaux de fréquence qui présentent le rapport entre le signal et les interférences plus le bruit maximums parmi les canaux de fréquence en sélectionnant les canaux de fréquence et en sélectionnant une puissance d'émission, tous deux déterminés conformément à l'algorithme suivant :

$$\{l_m, m = 1, K, M\} = \max_l \mathrm{SINR}_{l_m} \qquad \text{(Équation 4)}$$

**11.** Procédé selon la revendication 1, comprenant en outre :

sélection d'une puissance d'émission pour chaque équipement d'utilisateur conformément aux algorithmes suivants :

$$p_m = \frac{\dfrac{P}{\mathrm{SINR}_{l_m}}}{\sum_{q=1}^{M} \dfrac{1}{\mathrm{SINR}_{l_q}}}, m = 1, K, M \qquad \text{(Équation 5)}$$

où Pm est une puissance choisie du même équipement d'utilisateur et

$$P = \sum_{m=1}^{M} p_m \qquad \text{(Équation 6)}$$

est la contrainte de puissance totale pour la station de base.

**12.** Procédé selon la revendication 1, selon lequel ladite étape (i) comprend la surveillance des interférences à la transmission de données actuelle au niveau de ladite station de base pendant un intervalle d'écoute de la station de base organisé pour se produire de manière pseudo-aléatoire.

**13.** Procédé selon la revendication 1, selon lequel ladite étape (iii) comprend la réduction des réallocations de la transmission de données à un autre canal de fréquence afin de réduire les modifications desdites interférences à la transmission de données.

**14.** Station de base ($BS_n$) utilisable pour commander des interférences aux transmissions de données sur des canaux de fréquence attribués à un équipement d'utilisateur ($U_{11,33\text{-}33}$) par ladite station de base, ladite station de base comprenant :

un récepteur pouvant être utilisé pour surveiller les interférences à la transmission de données actuelle ;
un circuit logique d'estimation (30) pouvant être utilisé pour déterminer une efficacité de l'annulation des interférences pouvant être obtenue pour les transmissions de données sur les canaux de fréquence pouvant être attribués audit équipement d'utilisateur par ladite station de base ; et
un circuit logique de réattribution (70) pouvant être utilisé pour déterminer si les transmissions de données sur chaque canal de fréquence actuellement attribué échouent à obtenir une efficacité prédéterminée de l'annulation des interférences et, dans l'affirmative, pour réattribuer cette transmission de données à un autre canal de fréquence, ledit autre canal de fréquence étant sélectionné de manière à présenter une efficacité d'annulation des interférences améliorée.

**15.** Produit de programme informatique pouvant être utilisé, lorsqu'il est exécuté sur un ordinateur, pour réaliser les étapes du procédé selon la revendication 1.

EP 2 136 597 B1

FIG 1

FIG 2

EP 2 136 597 B1

RETURN

TRANSMIT
USING
REVERSE
CHANNEL

S70

LISTENING
INTERVAL

S30

DATA
INTERVAL

S10

SELECT
CHANNEL
REALLOCATION

S70

GENERATE
INTERFERENCE
COVARIANCE
MATRIX

S40

GENERATE
CHANNEL
MATRIX

S20

GENERATE
ANTENNA WEIGHTS
& SINR
MATRICES

S50

UPDATE
ANTENNA
WEIGHTS

S60

NO     ABOVE
THRESHOLD?     YES     RETURN

FIG 3

EP 2 136 597 B1

Subsystem 1

Subsystem 2

Subsystem 3

Listen

Transmit

FIG 4

FIG 5

Fig 6

FIG 7

EP 2 136 597 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2004057900 A

- WO 02054809 A

### Non-patent literature cited in the description

- **O. ASHAGI ; S. MURPHY ; L. MURPHY.** A distributed approach to interference mitigation between OFDM-based 802.16 Systems operating in license-exempt spectrum. *Proc. International Conference on Communications,* 2007, 4855-4860

- **T. IHALAINEN ; T. H. STITZ ; M. RINNE ; M. REN-FORS.** Channel equalization in filter bank based multicarrier modulation for wireless communications. *EURASIP Journal on Advances in Signal Processing,* 2007
- **R. A. MONZINGO ; T. W. MILLER.** Introduction to adaptive arrays. Wiley-Interscience, 1980